# EUROPÄISCHE PATENTANMELDUNG

(11) **EP 1 391 623 A2**
(43) Veröffentlichungstag der Anmeldung: **25.02.2004**
(21) Anmeldenummer: 03018440.2
(22) Anmeldetag: 14.08.2003
(51) Int. Cl.: F16D 21/06, F16D 13/58

(54) **Doppelkupplung**

(30) Priorität: 22.08.2002 DE 10238367; 07.08.2003 DE 10336180
(71) Anmelder: ZF Sachs AG, 97424 Schweinfurt (DE)
(72) Erfinder: Orlamünder, Andreas, Dipl.-Ing., 97422 Schweinfurt (DE); Vogt, Sebastian, Dipl.-Ing., 97616 Bad Neustadt (DE)

(57) **Zusammenfassung**

Eine Doppelkupplung, umfass einen ersten Kupplungsbereich (12) mit einer mit einer Widerlagerplatte (16) verbundenen Gehäuseanordnung (22), einer ersten Anpressplattenanordnung (26) sowie einer sich bezüglich der Gehäuseanordnung (22) und der Anpressplattenanordnung (26) abstützenden Kraftbeaufschlagungsanordnung (28), durch welche die Anpressplattenanordnung (26) auf die Widerlagerplatte (16) zu pressbar ist, einen zweiten Kupplungsbereich (14) mit einer zweiten Anpressplattenanordnung (32) und einer die Widerlagerplatte (16) axial überbrückenden Kraftübertragungsanordnung (36), durch welche die zweite Anpressplattenanordnung (32) beaufschlagbar ist, wobei die Gehäuseanordnung (22) und die Widerlagerplatte (16) durch Erzeugung eines Pressverbundes miteinander verbunden sind oder/und wobei ein erstes Kraftübertragungselement (38) und ein zweites Kraftübertragungselement (40) der Kraftübertragungsanordnung (36) durch Erzeugung eines Pressverbundes miteinander verbunden sind.

## Beschreibung

Die vorliegende Erfindung betrifft eine Doppelkupplung, umfassend einen ersten Kupplungsbereich mit einer mit einer Widerlagerplatte verbundenen Gehäuseanordnung, einer ersten Anpressplattenanordnung sowie einer sich bezüglich der Gehäuseanordnung und der ersten Anpressplattenanordnung abstützenden Kraftbeaufschlagungsanordnung, durch welche die Anpressplattenanordnung auf die Widerlagerplatte zu pressbar ist, einen zweiten Kupplungsbereich mit einer zweiten Anpressplattenanordnung und einer die Widerlagerplatte axial überbrückenden Kraftübertragungsanordnung zur Beaufschlagung der zweiten Anpressplattenanordnung.

Bei derartigen Doppelkupplungen ist es bekannt, beispielsweise die Gehäuseanordnung mit der Widerlagerplatte, über welche die Anbindung an ein Antriebsorgan erfolgt, durch Verschraubung zu verbinden. Hierzu ist an der Gehäuseanordnung im Allgemeinen ein Radialflanschbereich vorgesehen, durch welchen in axialer Richtung Befestigungsschrauben hindurchgeführt werden. Auch die Kraftübertragungselemente der Kraftübertragungsanordnung werden im Allgemeinen durch Verschraubung miteinander verbunden. Diese Schraubverbindungen beanspruchen vergleichsweise viel Bauraum, was auf Grund der Tatsache, dass in derartigen Doppelkupplungen sehr viele Bauteile in beschränktem Bauraum unterzubringen sind, häufig zu Problemen führt.

Es ist die Aufgabe der vorliegenden Erfindung, eine Doppelkupplung vorzusehen, welche bei einfachem und Bauraum sparenden Aufbau eine präzise Montierbarkeit gewährleistet.

Erfindungsgemäß wird diese Aufgabe gelöst durch eine Doppelkupplung, umfassend einen ersten Kupplungsbereich mit einer mit einer Widerlagerplatte verbundenen Gehäuseanordnung, einer ersten Anpressplattenanordnung sowie einer sich bezüglich der Gehäuseanordnung und der ersten Anpressplattenanordnung abstützenden Kraftbeaufschlagungsanordnung, durch welche die Anpressplattenanordnung in Richtung auf die Widerlagerplatte zu pressbar ist, einen zweiten Kupplungsbereich mit einer zweiten Anpressplattenanordnung und einer die Widerlagerplatte axial überbrückenden Kraftübertragungsanordnung, durch welche die zweite Anpressplattenanordnung beaufschlagbar ist, wobei die Gehäuseanordnung und die Widerlagerplatte durch Erzeugung eines Pressverbundes miteinander verbunden sind oder/und wobei ein erstes Kraftübertragungselement und ein zweites Kraftübertragungselement der Kraftübertragungsanordnung durch Erzeugung eines Pressverbundes miteinander verbunden sind.

Das Einführen eines Pressverbundes zum Verbinden zweier Bauteile, wie z.B. der Gehäuseanordnung oder der Widerlagerplatte, macht das Vorsehen von zusätzlichen Schraubbolzen oder dergleichen und entsprechenden Abschnitten zum Hindurchführen derselben überflüssig. Allein durch die im Pressverbund vorhandenen Reibschlusskräfte können die Bauteile miteinander gekoppelt werden. Dies bringt den weiteren Vorteil mit sich, dass beim Aneinanderheraribewegen und in Eingriff bringen der zu verbindenden Bauteile diese in eine definierte Lage gebracht werden können, die nicht notwendigerweise durch einen Endanschlag oder dergleichen bestimmt sein muss. Dadurch wird es möglich, die durch den Pressverbund zu verbindenden Bauteile exakt so bezüglich einander zu positionieren, dass die verschiedenen Kupplungsbereiche eine optimale Funktionscharakteristik aufweisen können.

Beispielsweise kann vorgesehen sein, dass die Widerlagerplatte einen ringartigen ersten Kopplungsbereich mit einer Innen-Kopplungsfläche aufweist und die Gehäuseanordnung einen ringartigen zweiten Kopplungsbereich mit einer Außen-Kopplungsfläche aufweist und dass der Pressverbund durch axiales Einschieben des zweiten Kopplungsbereichs in den ersten Kopplungsbereich erzeugt ist, wobei die Gehäuseanordnung vorzugsweise ein Blechumformteil umfasst. Durch die im Drehbetrieb einer derartigen Reibungskupplung auftretenden Fliehkräfte wird also die beispielsweise als Blechumformteil bereitgestellte und somit hinsichtlich der im Allgemeinen als Guss- oder Massivbauteil vorgesehenen Widerlagerplatte schwächere Gehäuseanordnung nach radial außen gegen den ersten Kopplungsbereich der Widerlagerplatte vorgespannt, so dass im Drehbetrieb hier eine Verstärkung des Reibkraftschlusses auftritt.

Um eine noch weiter erhöhte Sicherheit im Zusammenhalt sicherzustellen, nachdem zuvor eine exakte Lagepositionierung der beiden zu verbindenden Bauteile bezüglich einander erreicht worden ist, kann weiter vorgesehen sein, dass zusätzlich zu dem Pressverbund die Gehäuseanordnung und die Widerlagerplatte durch Verbindungselemente oder/und Verschweißung, Verklebung oder dergleichen verbunden sind.

Um zwischen den Kraftübertragungselementen eine Verbindung durch Pressverbund herstellen zu können, wird vorgeschlagen, dass eines der Kraftübertragungselemente einen ringartigen ersten Kopplungsbereich aufweist und das andere der Kraftübertragungselemente einen eine Mehrzahl von Axialvorsprüngen aufweisenden zweiten Kopplungsbereich aufweist und dass der Pressverbund durch axiales Ineinanderschieben des ersten Kopplungsbereichs und des zweiten Kopplungsbereichs erzeugt ist. Bei dieser Anordnung ist also zu berücksichtigen, dass zumindest eines der die Widerlagerplatte überbrückenden Kraftübertragungselemente Öffnungen in der Widerlagerplatte durchsetzen muss. Um dabei wieder die im Drehbetrieb auftretenden Fliehkräfte zur Verstärkung der Kopplung zwischen den beiden Kraftübertragungselementen nutzen zu können, wird vorgeschlagen, dass der erste Kopplungsbereich eine Innen-Kopplungsfläche aufweist, dass der zweite Kopplungsbereich eine Außen-Kopplungsfläche aufweist und dass der zweite Kopplungsbereich in den ersten Kopplungsbereich eingeschoben ist. Ferner kann insbesondere unter Berücksichtigung der im Bereich der axialen Vorsprünge vorhandenen Eigenelastizität eine sehr hohe Kopplungsstabilität erreicht werden, wenn ein Stützring vorgesehen ist, durch welchen der zweite Kopplungsbereich an seiner vom ersten Kopplungsbereich abgewandten Radialseite radial abgestützt ist.

Auch im Bereich der Kraftübertragungselemente kann es zur Erhöhung der Verbindungsstabilität dann weiter vorteilhaft sein, wenn zusätzlich zu dem Pressverbund die Kraftübertragungsorgane durch Verbihdungselemente oder/und Verschweißen, Verkleben oder dergleichen verbunden sind.

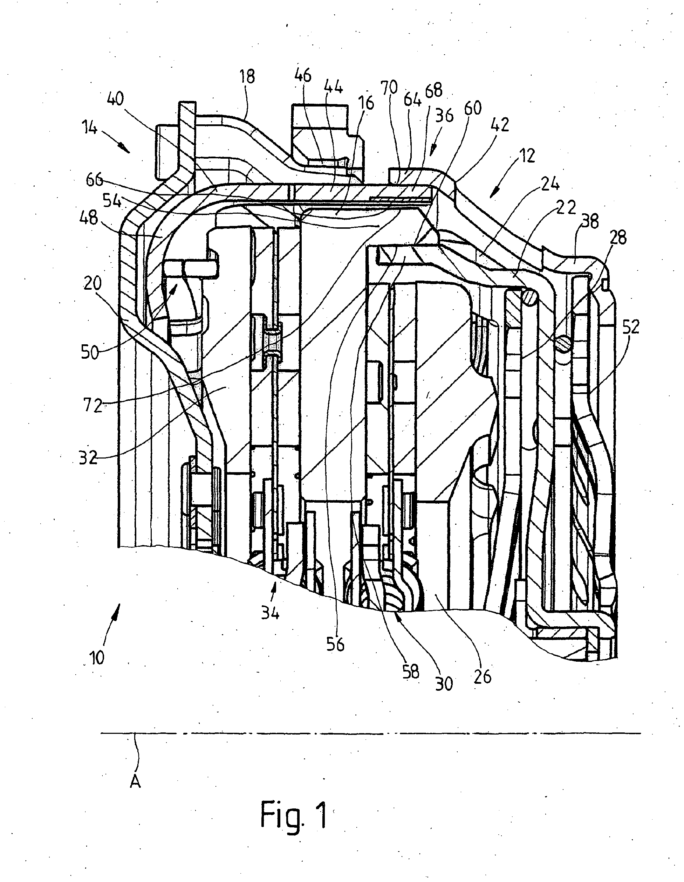

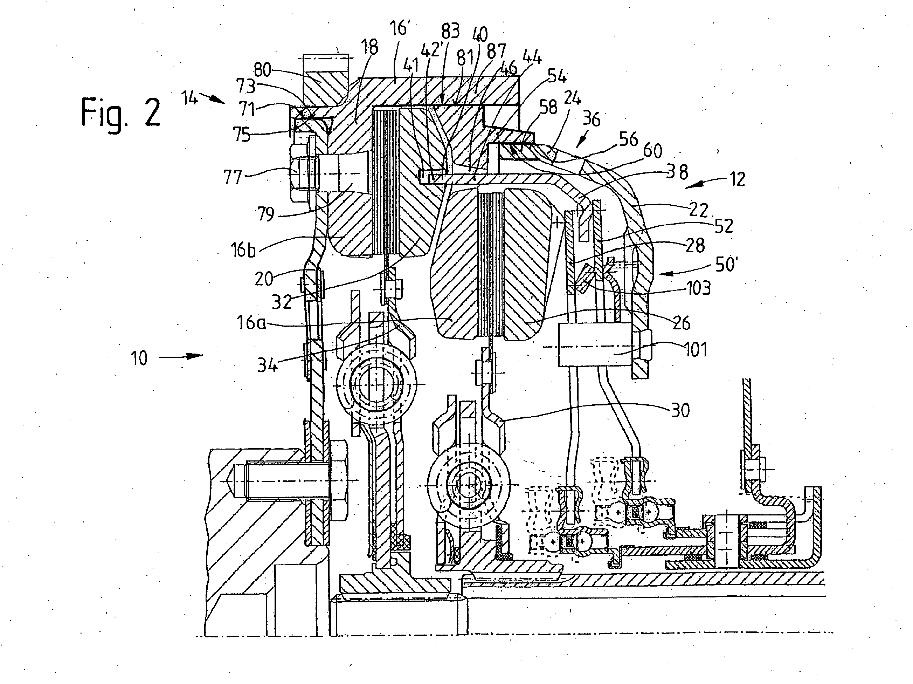

Die vorliegende Erfindung wird nachfolgend mit Bezug auf die beiliegende Figuren 1 und 2, welche jeweils einen Teil-Längsschnittansicht einer erfindungsgemäßen Doppelkupplung zeigen, detailliert erläutert.

Die Doppelkupplung 10 umfasst eine als Widerlagerplatte für zwei Kupplungsbereiche 12, 14 wirksame Zentralplatte 16. Diese trägt oder weist radial außen Kopplungsorgane 18 auf, die unter Einsatz einer als Flexplatte oder dergleichen ausgebildeten Kopplungsplatte 20 dann eine Anbindung an eine nicht dargestellte Antriebswelle ermöglichen.

Der erste Kupplungsbereich 12 umfasst ein topfartig ausgebildetes, beispielsweise als Blechumformteil bereitgestelltes Gehäuse 22. In einem näherungsweise axial sich erstreckenden Abschnitt 24 ist dieses, wie nachfolgend noch beschrieben, mit der Zentralplatte 16 verbunden. In dem Gehäuse 22 ist eine Anpressplatte 26 des ersten Kupplungsbereichs 12 vorgesehen. Eine beispielsweise eine Mehrzahl von Hebelelementen, einen Kraftspeicher, beispielsweise Membranfeder, oder dergleichen umfassende Kraftbeaufschlagungsanordnung 28 ist radial außen am Gehäuse 22 abgestützt und kann radial weiter innen die Anpressplatte 26 beaufschlagen, um diese zum Einspannen einer Kupplungsscheibe 30 auf die Zentralplatte 16 zu zu pressen. Zur Erzeugung dieser Kraftbeaufschlagungswirkung kann radial innen ein Betätigungsmechanismus an der Kraftbeaufschlagungsanordnung 28 angreifen, wobei bei Bereitstellung einer Kraftbeaufschlagungsanordnung 28 mit einer Mehrzahl von Hebelelementen hier eine Einrückkraft zu erzeugen ist.

Der zweite Kupplungsbereich 14 umfasst eine bezüglich der Anpressplatte 26 an der anderen axialen Seite der Zentralplatte 16 vorgesehene Anpressplatte 32. Zwischen dieser Anpressplatte 32 und der Zentralplatte 16 ist eine zweite Kupplungsscheibe 34 einspannbar. Um hierfür die erforderliche Kraftwirkung zu erzeugen, ist eine allgemein mit 36 bezeichnete Kraftübertragungsanordnung vorgesehen, die im dargestellten Beispiel zwei beispielsweise ebenfalls als Blechumformteile bereitgestellte Kraftübertragungselemente 38, 40 umfasst. Das Kraftübertragungselement 38 weist, ebenso wie das Gehäuse 32 eine näherungsweise topfartige Formgebung auf und ist im Wesentlichen das Gehäuse 22 außen umgebend angeordnet. In einem näherungsweise axial sich erstreckenden Abschnitt 42 ist es mit dem anderen Kraftübertragungselement 40 verbunden. Dieses weist eine Mehrzahl von Axialvorsprüngen 44 auf, die zur Überbrückung der Zentralplatte 16 darin vorgesehene Öffnungen 46 durchsetzen. Ein die Zentralplatte 16 und die Anpressplatte 32 hintergreifender ringartiger Bereich 48 des Kraftübertragungselements 40 beaufschlagt dann beispielsweise über eine Verschleißnachstellvorrichtung 50 die Anpressplatte 32. Um für diesen zweiten Kupplungsbereich 14 die Kraftbeaufschlagungswirkung erzeugen zu können, ist eine weitere Kraftbeaufschlagungsanordnung 52 vorgesehen. Auch diese kann eine Mehrzahl von Hebelelementen oder einen Kraftspeicher umfassen und ist an der Außenseite des Gehäuses 22, also bezüglich der Abstützung der erst genannten Kraftbeaufschlagungsanordnung 28 der anderen axialen Seite des Gehäuses 22, abgestützt und beaufschlagt radial weiter außen das Kraftübertragungselement 38. Auch hier ist also bei Bereitstellung einer Mehrzahl von Hebelelementen ein Einrückermechanismus erforderlich, um die zum Einrücken des zweiten Kupplungsbereichs 14 erforderliche Kraft bereitzustellen. Es sind also zwei Kupplungsbereiche 12, 14 des Normal-Offen-Typs dargestellt, die bei nicht vorhandener Betätigung keine Anpresskraft aufweisen und zum Einrücken des jeweiligen Kupplungsbereichs 12 oder 14 dann die Bereitstellung einer entsprechenden Einrückkraft erfordern. Selbstverständlich könnte bei Bereitstellung der Kraftbeaufschlagungsanordnungen 28, 52 als Membranfedern oder dergleichen die Doppelkupplung 10 grundsätzlich auch mit Kupplungsbereichen 12, 14 des Normal-Geschlossen-Typs aufgebaut sein.

Zur Verbindung mit dem Gehäuse 22 weist die die Zentralplatte 16 einen ringartigen Axialvorsprung 54 auf. Dieser bildet einen ersten Kopplungsbereich mit einer nach radial innen liegenden Innen-Kopplungsfläche 56. In entsprechender Weise weist das Gehäuse 22 an seinem axial sich erstreckenden Abschnitt 24 einen zweiten Kopplungsbereich 58 mit einer im Wesentlichen nach radial außen gerichteten Außen-Kopplungsfläche 60 auf. Das Gehäuse 22 und die Zwischenplatte 16 sind in ihren beiden Bereichen 54, 58 so aufeinander abgestimmt, dass durch axiales Ineinandereinschieben eine Presspassung in Form eines sogenannten Längs-Pressverbundes erzeugt wird. Hierzu kann beispielsweise vorgesehen sein, dass an zumindest einem dieser Bauteile eine Abphasung zum Ermöglichen einer trichterartigen Einführfunktiön vorgesehen ist. Alternativ oder zusätzlich kann vorgesehen sein, dass zur Herstellung dieses Pressverbundes die Zentralplatte 16 erwärmt wird, so dass sie sich geringfügig ausdient und das Einführen des Gehäuses 22 ermöglicht. Bei der Abkühlung und dem radialen Zusammenziehen wird dann der in axialer Richtung reibschlüssig wirksame Längs-Pressverbund erhalten.

Die Verbindung dieser beiden Teile 22, 16 unter Einsatz eines Pressverbundes macht das Vorsehen irgendwelcher Befestigungsschrauben, wie sie beim Stand der Technik bekannt sind, überflüssig. Dies führt zu einer sehr Platz sparenden Ausgestaltung. Des Weiteren wird es möglich, die Relativlage des Gehäuses bezüglich der Zwischenplatte 16 durch definiertes axiales Ineinandereinschieben so vorzusehen, dass die Anpressplatte 26 auch unter Berücksichtigung der axialen Dicke der Reibbeläge der Kupplungsscheibe 30 in eine optimale Lage gebracht wird. Um diese Verbindung noch weiter zu sichern, können beispielsweise in radialer Richtung Verbindungsbolzen eingeführt oder eingeschraubt werden, die dann noch eine formschlüssige Kopplung in axialer Richtung erzeugen, oder es kann eine Verschweißung oder Verklebung oder dergleichen dieser Bauteile erfolgen. Die Zentralplatte 16 könnte mit einem Axialvorsprung auch in das Gehäuse 22 zur Erzeugung eines Pressverbundes eingesetzt sein.

Auch im Bereich der Verbindung der beiden Kraftübertragungselemente 38, 40 kann eine sehr Platz sparende Anordnung dadurch erhalten werden, dass hier ein Pressverbund erzeugt wird. Dazu kann das im Wesentlichen topfartig ausgebildete Kraftübertragungselement 38 einen ringartigen ersten Kopplungsbereich 64 mit einer nach radial innen liegenden Innen-Kopplungsfläche 66 aufweisen. Die freien Endbereiche der Axialvorsprünge 44 bilden einen zweiten Kopplungsbereich 68 mit einer im Wesentlichen nach radial außen gerichteten Außen-Kopplungsfläche 70, die sich hier aus mehreren Flächensegmenten zusammensetzt. Auch hier kann durch axiales Ineinandereinführen ggf. unter Ausnutzung von Einweisschrägen oder dergleichen ein Pressverbund erhalten werden. Um dabei eine ausreichend feste Anlagewirkung der Axialvorsprünge nach radial außen hin sicherstellen zu können, ist es möglich, diese an ihrer von dem ersten Kopplungsbereich 64 abgewandten Seite durch einen Stützring 72 gegen eine Ausweichbewegung nach radial innen zu sichern. Auch bei der Kopplung der beiden Kraftübertragungselemente 38, 40 kann eine erhöhte Sicherheit dadurch noch erhalten werden, dass diese beiden Teile beispielsweise noch miteinander verschweißt, verklebt oder sonstigerweise material- oder formschlüssig verbunden werden, beispielsweise auch durch radiales Einschieben oder Einschrauben von Verbindungsbolzen. Auch bei dieser Baugruppe ist ein elementarer Vorteil die Einstellbarkeit der Relativlage der beiden Kraftübertragungselemente 38, 40 beim Zusammenfügen der Doppelkupplung, so dass auch die für den zweiten Kupplungsbereich 14 vorgesehene Anpressplatte 32 ihre optimale Lage bezüglich der Zentralplatte 16 einnehmen kann. Es können also in beiden Kupplungsbereichen die im Bereich verschiedener dort involvierter Bauteile auftretenden Fertigungstoleranzen beim Ansetzen des Gehäuses 22 und beim Zusammenfügen der beiden Kraftübertragungselemente 38, 40 andererseits berücksichtigt bzw. kompensiert werden.

Die in Fig. 2 dargestellte Doppelkupplung 10 umfasst eine alternative Ausgestaltung, dargestellt als Teil-Längsschnittansicht, aufweisend die erfindungsgemäßen Details bei Einsatz zweier Membranfedern als Kraftbeauschlagungsanordnungen, womit beide einzelne Kuopplungsbereiche dieser Doppelkupplung 10 des Typs Normaly-Closed-Version entsprechen. Der erste Kupplungsbereich 12 umfasst ein als Blechformteil ausgebildetes topfartiges Gehäuse 22, der in einem sich vornehmlich radial erstreckenden Endbereich des Gehäuses 22 sogenannte Distanzbolzen 101 zur drehfesten Lagerung der beiden Kraftbeaufschlagungselemente 28 und 52 enthält. In einem weiteren in Axialrichtung sich erstreckenden Endbereiches des Gehäuses 22 weist dieses einen sich axial erstreckenden Abschnitt 24 auf, welcher zusammenwirkt mit einem ersten Widerlagerbereich 16a. Radial innerhalb des Gehäuses 22 ist eine dem ersten Koppelungsbereich 12 zugeordnete Anpressplatte 26 eingebracht, welche zusammen mit dem ersten Widerlagerbereich 16a die Reibbeläge einer ersten Kupplungsscheibe 30 unter Einwirkung einer Kraftbeaufschlagungsanordnung 28, welche hier als Membran- oder Tellerfeder ausgeführt ist, einspannt. Die Kraftbeaufschlagungsanordnung 28 weist in ihrem radial innenliegenden Endbereich ein sogenanntes Ausrückelement auf, beinhaltend ein Ausrücklager, mittels welchem die Kraftbeaufschlagungsanordnung 28 von ihrem eingekuppelten in den ausgekuppelten Zustand gebracht werden kann. Die Kraftbeaufschlagungsanordnung 28 wird in Axialrichtung von einem Abstützring 103 in Axialrichtung positioniert, indem der Abstützring 103 eine weitere, zweite Kraftbeaufschlagungsanordnung 52 axial durchgreift, um sich an einer Verschleißnachstellung 50' abzustützen, welche bei Reibbelagverschleiß an den Kupplungsscheiben ihre axiale Ausdehnung entsprechend vergrößert. Alternativ ist es auch denkbar, dass die Kraftbeaufschlagungsanordnung 28 über den Abstützring 103 sich direkt am Gehäuse 22 des ersten Kuppelungsbereichs 12 abstützt und zwischen der Kraftbeaufschlagungsanordnung 28 und der Anpressplatte 26 eine Verschleißnachstellung zum Ausgleich des Reibbelagverschleißes eingebracht ist. In solch einer alternativen Ausgestaltung wirkt die hier gezeigte Verschleißnachstellung 50' lediglich zum Ausgleich des Belagverschleißes der zweiten Kupplungsscheibe 34 und somit nur auf die zweite Kraftbeaufschlagungsanordnung 52.

Die axial zwischen dem Gehäuse 22 und der ersten Kraftbeaufschlagungsanordnung 28 angeordnete zweite Kraftbeaufschlagungsanordnung 52 ist ebenso über die am Gehäuse 22 befestigten Distanzbolzen 101 in Radialrichtung und Umfangsrichtung gelagert. Radial innen wird die zweite Kraftbeaufschlagungsanordnung 52 zusammen mit einem zugeordneten Ausrückelement, beinhaltend ein Ausrücklager und der radial äußere Bereich der zweiten Kraftbeaufschlagungsanordnung 52, der sogenannte Federbereich wirkt auf eine Kraftübertragungsanordnung 36, welche die Anpresskraft auf eine zweite Anpressplatte 32 des zweiten Koppelungsorgans 18 überträgt. Hierbei setzt sich die Kraftübertragungsanordnung 36 zusammen aus den Kraftübertragungselementen 38 und 40, welche beim Zusammenbau der Doppelkupplungsanordnung zu der einteiligen Kraftübertragungsanordnung 36 verbunden werden. Hierbei durchsetzt die Kraftübertragungsanordnung 36 den ersten Widerlagerbereich 16a in seinen Öffnungen 46 mit die Öffnungen 46 fingerartig durchdringenden Axialvorsprüngen 44. Die Öffnungen 46 sind in Umfangsrichtung alternierend aufeinander im ersten Widerlagerbereich 16a ringartig angeordnet. Das Kraftübertragungselement 40 setzt sich in Axialrichtung von seinen fingerartigen Axialvorsprüngen 44 in Richtung auf die zweite Anpressplatte 32 des zweiten Koppelungsbereichs 18 fort, und bildet im axial sich erstreckenden Endabschnitt 42' eine geschlossene Ringform, welche in eine als Koppelungsbereich 41 ausgebildete, in der zweiten Anpressplatte 32 eingebrachten Ringnut, mittels eines Presssitzes eingreift. Durch die Ausbildung des axial sich erstreckenden Endabschnittes 42' als geschlossener Ring kann auch bei geringer Materialstärke der Kraftübertragungsanordnung 36 als Blechteil eine ausreichende Formsteifigkeit erzielt werden, um in Wirkverbindung mit dem Koppelungsbereich 41' eine einen ausreichend festen Sitz erzielende Presspassung ausgebildet werden. In diesem in Fig. 2 gezeigten Beispiel ist hierzu im Koppelungsbereich 41 der zweiten Anpressplatte 32 des zweiten Koppelungsbereiches die nach radial außen weisende Axialfläche zusammenwirkend mit der nach radial innen weisenden Axialfläche des axial sich erstreckenden Endabschnittes 42' zusammenwirkend. Der Koppelungsbereich 41 erstreckt sich hierbei in Axialrichtung entsprechend weit, um ein sicheres Fügen mit der Kraftübertragungsanordnung 36 zu gewährleisten. Hiermit ist insbesondere eine ausreichend feste, die im Betrieb und bei der Montage auftretenden Kräfte ausreichend übertragende Verbindung dargestellt, mittels welcher während des Erstellens dieses Längspressverbundes die vorbestimmte axiale Ausdehnung eingestellt werden kann. So kann beispielsweise eine ungünstige Aufsummierung der in Axialrichtung weisenden Bauteilausdehnungen eine individuelle Tolerierung des vorstehenden Axialmaßes erfordern. Auch ist eine teuere und schwierig zu erstellende Fertigung der Kraftübertragungsanordnung 36 mit genau festgelegter axialer Ausdehnung nicht notwendig, da eventuelle Fertigungstoleranzen während der Fügung mit der zweiten Anpressplatte 32 ausgeglichen werden können. Alternativ ist es auch denkbar, dass der Koppelungsbereich 41 mit einer nach radial innen weisenden Axialfläche mit der Kraftübertragungsanordnung 36 eine entsprechende Presssitzverbindung aufweist. Hierbei weist dann der Koppelungsbereich 41 eine nach radial außen weisende Axialerstreckungsfläche auf. Zur Steigerung der Festigkeit des Presssitzes können die miteinander im Presssitz zusammenwirkenden Axialflächen eine Rändelung bzw. entsprechende Oberflächenrauhigkeit, wie sie sich z. B. in Folge einer Drehbearbeitung als umlaufende Rillen ausbildende Oberfläche aufweisen. Hierbei findet eine vorteilhafte Verzahnung der aufeinander gepressten Flächen statt. Zur Erzielung einer besonders festen Verbindung im Bereich des Koppelungsbereichs 41, mit dem sich axial erstreckenden Endabschnitt 42' des Kraftübertragungselementes 40, kann auch sowohl die nach radial außen weisende Axialfläche des Koppelungsbereichs 41 als auch die nach radial innen weisende Axialfläche desselben zusammenwirken in Funktion eines Pressverbundes mit vorgenanntem Endabschnitt 42'. Dies ist insbesondere dann von Vorteil, wenn die Öffnungen 46 innerhalb des ersten Widerlagerbereiches 16a in Umfangsrichtung sich als länglich ausgebildete Öffnungen darstellen, durch welche die fingerartigen Axialvorsprünge 44 durchgreifen und sich fortsetzen bis in den Endabschnitt 42', ohne einen geschlossenen Ring zu bilden. Auf diese Weise gestaltet sich die Zusammenfügung des ersten Widerlagerbereiches 16a zusammen mit der Kraftübertragungsanordnung 36 und der zweiten Anpressplatte 32 während des Zusammenbaus besonders einfach. Da jedoch der sich axial erstreckende Endabschnitt 42' kein geschlossener Ring ist, fehlt die entsprechende Bauteilsteifigkeit desselben, um zusammenwirkend mit dem Koppelungsbereich 41 einen ausreichend festen Pressverbund zu bilden, wenn nur eine der beiden in Radialrichtung weisenden Axialflächen mit dem Kraftübertragungselement 40 zusammenwirkt. Über die Kraftübertragungsanordnung 36 kann nun die zweite Anpressplatte 32 die zweite Kupplungsscheibe 34 zusammen mit dem zweiten Widerlagerbereich 16b in bekannter Weise beaufschlagen. Der zweite Widerlagerbereich 16b ist ebenso über einen erfindungsgemäßen Pressverbund mit dem ersten Widerlagerbereich 16a verbunden und bildet dadurch ein gemeinsames Widerlager 16'. Auf die entsprechend ausgebildete Verbindung wird hier zu einem späteren Zeitpunkt noch eingegangen.

Der zweite Koppelungsbereich 14 weist ein Kuppelungsorgan 18 auf, welches radial innen den zweiten Widerlagerbereich 16b bildet. Das Koppelungsorgan 18 weist einen Zentrierbund 71 auf, welcher mit einer Koppelungsplatte 20 zusammenwirkt, die hier als sogenannte Flex-Plate ausgebildet ist und somit Taumelschwingungen und Achsfluchtungsfehler zwischen der Kurbelwelle und den Getriebeeingangsachsen ausgleichen kann. Die Koppelungsplatte 20 ist in herkömmlicher Weise, z. B. über Passstiftverbindungen oder Schraubverbindungen bzw. über eine Zentralschraube, mit der Kurbelwelle verbunden. Eine Anbindung über eine Zentralschraube hat den Vorteil, dass die Koppelungsplatte zusammen mit der Doppelkupplungseinheit 10 in einem Stück an die Kurbelwelle des Motors befestigt werden kann, indem durch die Öffnung, durch die später die Getriebeeingangswellen hineinragen, zum Eingriff mit den Kupplungsscheiben 30 und 34 zentral befestigt werden kann, und somit als Gesamtbaueinheit wie Doppelkupplung an den Motor angesetzt werden kann. Die hier als Flex-Plate ausgebildete Koppelungsplatte 20 ist ebenfalls über einen sogenannten Pressverbund mit dem Koppelungsorgan 18 fest zusammengefügt. Hierzu weist der Zentrierbund 71 nach radial innen weisende, axial sich erstreckende Innenkopplungsflächen 73 auf, die in Umfangsrichtung auf der gedachten Linie eines Kreises liegen. Durch das Vorsehen von nur abschnittsweise in Eingriff befindlichen Passflächen der Innenkoppelungsfläche 73 reduzieren sich die Herstellkosten und das Bauteilgewicht. Der Zentrierbund 71 wird durch den von radial außen aufgebrachten Verzahnungsring 80, in den das Anlasserritzel eingreift ausreichend versteift, um die bei der Fügung des Pressverbundes zwischen Koppelungsplatte 20 und dem Koppelungsorgan 18 entstehenden Abstützkräfte der Innenkoppelungsfläche 73 und Außenkoppelungsfläche 75 gegeneinander abzufangen, und somit eine ausreichend feste Verbindung herzustellen. Die Koppelungsplatte 20 ist weiterhin mit sogenannten Füge-Lösemitteln 77 versehen, mittels denen der Pressverbund zwischen der Koppelungsplatte 20 und dem Koppelungsorgan 18 hergestellt und wieder aufgehoben werden kann. Hier ist es z. B. denkbar, dass zu diesem Zwecke die Füge-Lösemittel 77 als Schrauben ausgebildet sind, die axial fest aber drehbar mit der Koppelungsplatte 20 verbunden sind. Dies kann z. B. über einen Bund an einem Schraubenkopf ausgeführt sein, der durch eine an der Kopplungsplatte 20 ausgeführten Nut, die den am Schraubenkopf ausgeführten Flansch vollständig umfasst, und somit die Schraube innerhalb dieser den Schraubenkopf umgebenden Nut drehbar, jedoch axial fest gehalten wird. Durch Vorsehen mehrerer solcher Füge-Lösemittel 77 an der Koppelungsplatte 20 sowie korrespondierenden Haltebereichen 79 innerhalb des Koppelungsorgans 18 ist es möglich, die Koppelungsplatte 20 mit dem Koppelungsorgan 18 zum gewünschten Pressverbund zusammen zu fügen, wobei die Füge-Lösemittel 77 vornehmlich nicht zur Kraftübertragung des Antriebsdrehmomentes gedacht sind, sondern einerseits eine Sicherheit zur Erhöhung des übertragbaren Drehmomentes darstellen, aber vornehmlich angebracht sind, um im Schadensfall bzw. Reparaturfall die Doppelkupplung 10 von der Koppelungsplatte 20 zu trennen, indem die Füge-Lösemittel 77 betätigt werden.
Hierzu werden die Füge-Lösemittel ,im Beispiel als Ausführung als Schrauben dargestellt, gedreht, und durch ihren Schraubeingriff innerhalb des Kopplungsorgans 18 bewirken diese ein Herauspressen der Koppelungsplatte 20 weg von dem Koppelungsorgan 18, indem der Pressverbund zwischen der Außenkoppe-lungsfläche 75 und der Innenkopplungsfläche 73 aufgehoben bzw. unter Krafteinwirkung in Axialrichtung getrennt wird.
In alternativer Ausgestaltung ist es an dieser Fügestelle der Koppelungsplatte 20 mit dem Koppelungsorgan 18 auch möglich, die Außenkopplungsfläche 75 zusammenwirkend mit der Innenkoppe-lungsfläche 73 derart auszuführen, dass hier kein Pressverbund entsteht, sondern eine sogenannte Übergangspassung. Die Übergangspassung kennzeichnet sich dadurch, dass die Abmaße der Innenkopplungsfläche 73 und der Außenkopplungsfläche 75 derart aufeinander abgestimmt sind, dass hier beim Zusammenfügen kein Spiel entsteht, sondern eine sogenannte Übergangspassung, die zwar eine Fügung der beiden Bauteile 20 und 18 miteinander nur unter Krafteinwirkung in Axialrichtung ermöglicht, der Verbund der beiden Bauteile Kopplungsplatte 20 und Koppelungsorgan 18 an der Außenkopplungsfläche 75 und der Innenkopplungsfläche 73 nicht ausreichend fest ist, um das anliegende Drehmoment zu übertragen. Die Außenkoppelungsfläche 75 und die Innenkopplungsfläche 73 liegen nur insoweit im Reibeingriff, als dass die Flächen beim Zusammenfügen beider Bauteile aneinander reiben, jedoch eine Trennung als auch das Zusammenfügen selbst nur geringe Fügekräfte erfordert.

Beispielsweise bieten sich hier Übergangspassungen nach DIN 7157 der Passung H7/k6 oder als Festsitz die Übergangspassung H7/n6 an. Entsprechende Beispiele hierzu können dem Taschenbuch für Maschinenbau "Dubbel" 15. Auflage, Seite 339 entnommen werden. Durch die vorangestellte Fügung der Koppelungsplatte 20 mit dem Koppelungsorgan 18 durch einen Pressverbund wird eine genaue und dauerhafte Verbindung, ohne die Gefahr beim Zusammenbau eine Unwucht zu erzeugen, erreicht.
Es sei hier noch erwähnt, dass die Verbindung aus Haltebereich 79 und Füge-Lösemittel 77 auch erzielt werden kann, indem der Haltebereich 79 als sogenannter Stehbolzen, also eine in das Koppelungsorgan 18 eingebrachten Gewindeabschnitt mit einem an der Koppelungsplatte 20 angebrachten Schraubenkopf, erzielt werden kann. Hierbei ist es alternativ möglich, den Haltebereich 79 als Stehbolzen insoweit auszuführen, dass dieser über das Kopplungsorgan 18 mit einem als Passstift ausgebildeten zylindrischen Abschnitt übersteht, und im weiteren axialen Überstand seinen Gewindeabschnitt ausbildet. Entsprechende Ausführungsformen sind ebenfalls im vorgenannten Taschenbuch für den Maschinenbau abgebildet. Für Fälle, in denen die exakte Lage des Verzahnungsringes 80 zur Kurbelwellenwinkelstellung festgelegt ist, z. B. um die Zündfolge hierüber zu steuern, können mittels einer über den Umfang ungleichmäßig verteilten Anordnung von Füge-Lösmitteln 77 zusammen mit Haltebereichen 79 eine exakte Drehwinkelpositionierung der Doppelkupplung 10 zur Kurbelwelle vorbestimmt werden.

Die Verbindung des ersten Widerlagerbereiches 16a zusammen mit dem Gehäuse 22 am zweiten Koppelungsbereich 58 geschieht wiederum durch Ausbildung eines Pressverbundes entsprechend der vorgenannten Beschreibung zu Fig. 1 und Fig. 2. Hierbei ist an dem zum gesamten Widerlagerbereich 16' zuzuordnenden ersten Widerlagerbereich 16a radial außerhalb des Gehäuses 22 ein Axialvorsprung 54 ausgebildet, welcher eine nach radial innen weisende, in Axialrichtung sich erstreckende Innenkoppelungsfläche 56 aufweist. Vorzugsweise ist der Axialvorsprung 54 als geschlossener, umlaufender vorgesehen, da somit wegen der höheren Bauteilsteifigkeit ein festerer Pressverbund hergestellt werden kann. Entsprechend ist am Gehäuse 22 ein axial sich erstreckender Abschnitt 24 mit einer nach radial außen weisenden Außenkopplungsfläche 60 ausgeführt. Entsprechend den vorgenannten Beispielen wird über die Innenkopplungsfläche 56 zusammenwirkend mit der Außenkoppelungsfläche 60 ein ausreichend fester Pressverbund hergestellt, dessen axiale Bauteilabmaße bei der Herstellung des zuvor genannten Pressverbundes exakt festgelegt werden können. Zusätzlich um eine festere Verbindung dieses Pressverbundes zwischen Gehäuse 22 und ersten Widerlagerbereich 16a herzustellen ist es noch möglich, hier eine Bohrung durchdringend den Axialvorsprung 54 und zumindest teilweise den axial sich erstreckenden Abschnitt 24 in Radialrichtung einzubringen und einen Passstift einzuschlagen oder einen Niet einzubringen. Auch ist alternativ eine Schraubverbindung als Sicherungsmaßnahme denkbar. Die Schraube würde hierbei den Axialvorsprung 54 des ersten Widerlagerbereiches 16a von radial außen durchdringen und bis in den axial sich erstreckenden Abschnitt 24 des Gehäuses 22 hineinragen.

Die Verbindung des ersten Widerlagerbereiches 16a zusammen mit dem zweiten Widerlagerbereich 16b erfolgt ebenfalls über einen erfindungsgemäßen Presssitzverbund. Der dritte Kopplungebereich 83 weist ebenfalls eine Innenkoppelungsfläche 83 zugehörig zum zweiten Widerlagerbereich 16b auf, welches sich nach radial innen weisend axial erstreckt und im Einbauzustand in Wirkverbindung steht mit der Außenkopplungsfläche 81 des ersten Widerlagerbereiches 16a. Prinzipiell ist es möglich, den dritten Koppelungsbereich 83 entsprechend dem vierten Koppelungsbereich 77, welcher zwischen der Außenkopplungsfläche 75 und der Innenkoppelungsfläche 73 ausgebildet ist, auszuführen. Es gelten hierzu die gemachten Ausführungen zum Pressverbund der Koppelungsplatte 20 mit dem Koppelungsorgan 18. Es ist also möglich, hier entweder einen festsitzenden Pressverbund oder aber eine entsprechende Übergangspassung vorzusehen. Wie aus der Zeichnung ersichtlich, ist der dritte Koppelungsbereich 83 ebenso wie der vierte Koppelungsbereich 77 der vollen Drehmomentbelastung des Motors bzw. des Getriebes ausgesetzt, wodurch besonders hohe Anforderungen an die Belastbarkeit und Haltbarkeit vorliegen. Für den Fall eines Pressverbundes zwischen dem ersten Widerlagerbereich 16a und dem zweiten Widerlagerbereich 16b wird die Außenkoppelungsfläche 81 des ersten Widerlagerbereiches 16a in Wirkverbindung gebracht mit der Innenkoppelungsfläche 83 des zweiten Widerlagerbereiches 16b. Um die Drehmomentübertragungsfähigkeit im Bereich des dritten Koppelungsbereiches 83 nochmals zu erhöhen ist es möglich, von radial außen dem zweiten Widerlagerbereich 16b zu durchbohren und die Innenkoppelungsfläche 83 und die Außenkoppelungsfläche 81 mit dieser Bohrung zu durchdringen und anschließend nach dem Herstellen des Pressverbundes hier einen Niet- oder einen Einschlagstift oder bei Einbringen eines Gewindes anstatt einer Bohrung eine Schraube einzudrehen. Hierdurch wird ein Formschluss zwischen dem ersten Widerlagerbereich 16a und dem zweiten Widerlagerbereich 16b erzielt, welcher sowohl in Axialrichtung als auch in Umfangsrichtung zur Kraftübertragung beiträgt. Um die Drehmomentübertragungsfähigkeit des Pressverbundes des dritten Koppelungsbereichs 83 zu erhöhen, ist es auch denkbar, im axialen Auslaufbereich der Außenkopplungsfläche 81 eine in Umfangsrichtung verlaufende Phase am ersten Widerlagerbereich 16a anzubringen und diese Phase mittels einer Schweißnaht zu füllen. Hier würden also der erste Widerlagerbereich 16a und der zweite Widerlagerbereich 16b zumindest teilweise miteinander verschweißt. Für den Fall, dass entweder einer der Widerlagerbereiche 16a und 16b oder beide einen hohen Kohlenstoffgehalt aufweisen, ist es denkbar, die vorgenannte V-Naht- bzw. vorgenannte Phase besonders groß auszuführen, um eine dicke V-Naht mit großer Schweißgutzugabe einzubringen. Bevorzugt ist dann das Schweißgut hochnickelhaltig oder besonders kohlenstoffarm zur Vermeidung von nicht zulässigen Spannungen in der Schweißnaht bzw. Aufhärtung der miteinander verschmolzenen Bauteile.

In weiterer Ausgestaltung der Erfindung ist es auch denkbar, sowohl Gedanken bzw. erfinderische Anteile aus der Fig. 1 zu kombinieren mit entsprechenden Details aus der Fig. 2, oder alternativ Konstruktionsdetails der beiden Fig. miteinander zu kombinieren.

## Patentansprüche

1. Doppelkupplung, umfassend
- einen ersten Kupplungsbereich (12) mit einer mit einer Widerlagerplatte (16) verbundenen Gehäuseanordnung (22), einer ersten Anpressplattenanordnung (26) sowie einer sich bezüglich der Gehäuseanordnung (22) und der Anpressplattenanordnung (26) abstützenden Kraftbeaufschlagungsanordnung (28), durch welche die Anpressplattenanordnung (26) auf die Widerlagerplatte (16) zu pressbar ist,
- einen zweiten Kupplungsbereich (14) mit einer zweiten Anpressplattenanordnung (32) und einer die Widerlagerplatte (16) axial überbrückenden Kraftübertragungsanordnung (36), durch welche die zweite Anpressplattenanordnung (32) beaufschlagbar ist,
wobei die Gehäuseanordnung (22) und die Widerlagerplatte (16) durch Erzeugung eines Pressverbundes miteinander verbunden sind oder/und
wobei ein erstes Kraftübertragungselement (38) und ein zweites Kraftübertragungselement (40) der Kraftübertragungsanordnung (36) durch Erzeugung eines Pressverbundes miteinander verbunden sind.

2. Doppelkupplung nach Anspruch 1,
**dadurch gekennzeichnet, dass** die Widerlagerplatte (16) einen ringartigen ersten Kopplungsbereich (54) mit einer Innen-Kopplungsfläche (56) aufweist und die Gehäuseanordnung (22) einen ringartigen zweiten Kopplungsbereich (58) mit einer Außen-Kopplungsfläche (60) aufweist und dass der Pressverbund durch axiales Einschieben des zweiten Kopplungsbereichs (58) in den ersten Kopplungsbereich (54) erzeugt ist.

3. Doppelkupplung nach Anspruch 1 oder 2,
**dadurch gekennzeichnet, dass** die Gehäuseanordnung (22) ein Blechumformteil umfasst.

4. Doppelkupplung nach einem der Ansprüche 1 bis 3,
**dadurch gekennzeichnet, dass** zusätzlich zu dem Pressverbund die Gehäuseanordnung (22) und die Widerlagerplatte (16) durch Verbindungselemente oder/und Verschweißung, Verklebung oder dergleichen verbunden sind.

5. Doppelkupplung nach einem der Ansprüche 1 bis 4,
**dadurch gekennzeichnet, dass** eines (38) der Kraftübertragungselemente (38, 40) einen ringartigen ersten Köpplungsbereich (64) aufweist und das andere (40) der Kraftübertragungselemente (38, 40) einen eine Mehrzahl von Axialvorsprüngen (44) aufweisenden zweiten Kopplungsbereich (68) aufweist und dass der Pressverbund durch axiales Ineirianderschieben des ersten Kopplungsbereichs (64) und des zweiten Kopplungsbereichs (68) erzeugt ist.

6. Doppelkupplung nach Anspruch 5,
**dadurch gekennzeichnet, dass** der erste Kopplungsbereich (64) eine Innen-Kopplungsfläche (66) aufweist, dass der zweite Kopplungsbereich (68) eine Außen-Kopplungsfläche (70) aufweist und dass der zweite Kopplungsbereich (68) in den ersten Kopplungsbereich (64) eingeschoben ist.

7. Doppelkupplung nach Anspruch 5 oder 6,
**gekennzeichnet durch** einen Stützring (72), **durch** welchen der zwei te Kopplungsbereich (68) an seiner vom ersten Kopplungsbereich (64) abgewandten Radialseite radial abgestützt ist.

8. Doppelkupplung nach einem der Ansprüche 5 bis 7,
**dadurch gekennzeichnet, dass** zusätzlich zu dem Pressverbund die
Kraftübertragungsorgane (38, 40) durch Verbindungselemente oder/und Verschweißen, Verkleben oder dergleichen verbunden sind.
